(19) Europäisches Patentamt
European Patent Office
Office européen des brevets

(11) **EP 4 786 545 A1**

(12) **EUROPEAN PATENT APPLICATION**
published in accordance with Art. 153(4) EPC

(43) Date of publication:
**05.08.2026 Bulletin 2026/32**

(21) Application number: 24872340.5

(22) Date of filing: **26.09.2024**

(51) International Patent Classification (IPC):
*C08L 29/04* (2006.01)    *B32B 27/28* (2006.01)
*C08K 3/11* (2018.01)    *C08K 3/105* (2018.01)

(52) Cooperative Patent Classification (CPC):
**B32B 27/20; B32B 27/28; B65D 65/40; C08F 8/12;
C08F 210/02; C08F 216/06; C08K 3/105;
C08K 3/11; C08K 3/22; C08K 3/24; C08L 29/04**

(86) International application number:
**PCT/JP2024/034322**

(87) International publication number:
**WO 2025/070554 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **29.09.2023 JP 2023169798**

(71) Applicant: **Mitsubishi Chemical Corporation
Tokyo 100-8251 (JP)**

(72) Inventors:
• **YAMAMOTO, Nobuyuki**
**Tokyo 100-8251 (JP)**
• **TOMITA, Yuuko**
**Tokyo 100-8251 (JP)**
• **YANO, Tomotake**
**Tokyo 100-8251 (JP)**

(74) Representative: **Hoffmann Eitle
Patent- und Rechtsanwälte PartmbB
Arabellastraße 30
81925 München (DE)**

(54) **COMPOSITION, MOLDING MATERIAL, MULTILAYER STRUCTURE, MOLDED BODY, FOOD PACKAGE, AND METHOD FOR PRODUCING COMPOSITION AND MULTILAYER STRUCTURE**

(57)    A composition containing an ethylene-vinyl alcohol copolymer, a titanium compound, and an alkali metal compound, wherein at least a portion of the ethylene-vinyl alcohol copolymer is derived from biomass, and a mass ratio of a content of the alkali metal compound in terms of metal to a content of the titanium compound in terms of metal is from 500 to 280000 is provided as a composition excellent in thermal stability.

EP 4 786 545 A1

## Description

Technical Field

The present disclosure relates to a composition, a molding material, a multilayer structure, a molded body, a food packaging body, and a method for producing a composition and a multilayer structure.

Background Art

Ethylene-vinyl alcohol copolymers (hereinafter may be referred to as "EVOH resin") are excellent in transparency, gas barrier properties with respect to oxygen or the like, aroma retaining properties, solvent resistance, oil resistance, mechanical strength, and the like. The copolymers are molded into films, sheets, bottles, and the like, and are widely used as various packaging materials such as food packaging materials, pharmaceutical packaging materials, industrial drug packaging materials, and agrochemical packaging materials.

Meanwhile, in recent years, the demand for bioplastics using carbon-neutral biomass-derived raw materials has increased with the aim of achieving a recycling-oriented society. However, it is known that biomass-derived synthetic resins are inferior in performance to fossil fuel-derived synthetic resins. Thus, a biomass-derived resin having performance comparable to that of a fossil fuel-derived resin has been studied by combining a biomass-derived raw material and a fossil fuel-derived raw material.

For example, Patent Literatures 1 and 2 disclose a gas barrier resin composition in which a part of ethylene and vinyl ester, which are raw materials of an EVOH resin, are derived from biomass. Patent Literatures 1 and 2 disclose that the gas barrier resin composition has gas barrier properties and long-run properties like a composition using only fossil fuel-derived raw materials.

Citation List

Patent Literature

    Patent Literature 1: JP 2022-13857 A
    Patent Literature 2: JP 2022-27726 A

Summary

Technical Problem

According to the study conducted by the inventors, the thermal stability is insufficient by the techniques disclosed in Patent Literatures 1 and 2, and there is room for further improvement of thermal stability.

Under such a circumstance, the present disclosure provides a resin composition having excellent thermal stability even in the case of an EVOH resin using a biomass-derived raw material.

Solution to Problem

As a result of intensive studies in view of such circumstances, the present inventors have found that excellent thermal stability is achieved when a titanium compound and an alkali metal compound are contained at a specific mass ratio in an EVOH resin which is partially composed of a biomass-derived raw material.

That is, the present disclosure provides the following aspects.

[1] A composition containing an EVOH resin, a titanium compound, and an alkali metal compound, wherein

    at least a portion of the EVOH resin is derived from biomass, and
    a mass ratio of a content of the alkali metal compound in terms of metal to a content of the titanium compound in terms of metal is from 500 to 280000.

[2] The composition according to [1], wherein the content of the titanium compound in terms of metal is 0.0001 ppm or more and less than 5000 ppm or relative to a mass of the composition.

[3] The composition according to [1] or [2], wherein the content of the titanium compound in terms of metal is 0.0001 ppm or more and 2 ppm or less relative to a mass of the composition.

[4] The composition according to any of [1] to [3], wherein the content of the titanium compound in terms of metal is 0.0001 ppm or more and less than 1 ppm relative to a mass of the composition.

[5] The composition according to any of [1] to [4], wherein the EVOH resin has a biobased content of from 0.01 to 100%.

[6] The composition according to any of [1] to [5], wherein the EVOH resin has a biobased content of from 1 to 99%.

[7] A molding material containing the composition according to any of [1] to [6].

[8] A multilayer structure including a layer containing the composition according to any of [1] to [6].

[9] The multilayer structure according to [8], further including an adhesive resin layer.

[10] A molded body including the multilayer structure according to [8] or [9].

[11] A food packaging body including the multilayer structure according to [8] or [9].

[12] A method for producing the composition according to any of [1] to [6], the method including mixing the EVOH resin and the titanium compound.

[13] A method for producing the multilayer structure according to [8] or [9], the method including melt-molding a layer containing the composition.

Advantageous Effects

The composition of the present disclosure is excellent in thermal stability. In addition, a molding material formed of the composition of the present disclosure and a multilayer structure, a molded body, and a food packaging body having a layer containing the composition of the present disclosure are also excellent in thermal stability.

Description of Embodiments

The present disclosure will be described below with reference to embodiments for carrying out the present disclosure. However, the present disclosure is not limited to the embodiments described below.

In the present specification, the wording "x and/or y (with x and y being any configurations)" means at least one selected from x and y, and includes the three meanings of only x, only y, and both x and y.

Unless otherwise specified, the expression "from X to Y" (with X and Y being any numbers) includes the meaning of "X or more and Y or less" and the meaning of "preferably more than X" or "preferably less than Y".

The expression "X or more" (X is any number) or "Y or less" (Y is any number) encompasses "preferably more than X" or "preferably less than Y".

In the present specification, with respect to numerical ranges described in steps, the upper limit value or the lower limit value of a numerical range of a certain step can be optionally combined with the upper limit value or the lower limit value of a numerical range of another step. In addition, in a numerical range described in the present specification, the upper limit value or the lower limit value of the numerical range can be replaced with a value presented in the Examples.

In the present specification, the term "layer" means that a relatively thin layer such as a "film", a "tape", or a "sheet" is included in addition to a thick layer.

Composition

A composition according to an embodiment of the present disclosure (hereinafter, the composition may be referred to as "the present composition") contains an EVOH resin as an essential component, and contains a titanium compound and an alkali metal compound at a specific mass ratio.

That is, in the present composition, the content of the EVOH resin in the present composition is usually 1 mass% or more, preferably 10 mass% or more, more preferably 50 mass% or more, still more preferably 60 mass% or more, particularly preferably 70 mass% or more, especially preferably 80 mass% or more, yet especially preferably 90 mass% or more, yet still more preferably 95 mass% or more. The upper limit value is 100 mass%, and may be 99 mass%, for example, from 1 to 100 mass% or from 10 to 99 mass%.

Hereinafter, the respective components will be described.

EVOH Resin

In the EVOH resin used in the present embodiment, at least a portion of the EVOH resin is derived from biomass. More specifically, the EVOH resin refers to an EVOH resin in which at least a portion of the ethylene structural unit, the vinyl alcohol structural unit, and the vinyl ester structural unit of the EVOH resin is derived from biomass.

The EVOH resin is a water-insoluble thermoplastic resin obtained by saponifying an ethylene-vinyl ester copolymer, which is a copolymer of ethylene and vinyl ester at least partially derived from biomass.

The fact that the ethylene and/or vinyl ester used as the raw material is derived from biomass can be confirmed by measuring the biobased content. The biobased content is an index representing the proportion of a biomass-derived raw material, and in the present specification, it is a biobased carbon content determined by measuring the concentration of radioactive carbon [$^{14}$C (hereinafter, referred to as "carbon-14")] with an accelerator mass spectrometer (AMS). The biobased content can be specifically measured according to the method described in ASTM D6866-18. That is, usually, when the biobased content of the EVOH resin is more than 0% and 100% or less, it can be said that the ethylene and/or vinyl ester used as a raw material is derived from biomass.

The term "biomass" refers to a resource that is organic matter derived from animals and plants, excluding resources derived from fossil fuel (fossil resources). From the viewpoint of cost and environment, it is preferable that biomass is a resource that is organic matter derived from plants, i.e., derived from a biomass raw material.

Biomass-derived ethylene can be produced by, for example, purifying bioethanol from a biomass raw material and performing a dehydration reaction.

Biomass-derived vinyl ester is produced by, for example, a method in which ethylene, acetic acid, and oxygen molecules are caused to react using a palladium catalyst, which is a general industrial method.

Examples of the biomass raw material include waste type, unused type, and resource crop type biomass raw materials, and examples thereof include cellulose-based crops (pulp, kenaf, straw, rice straw, waste paper, paper residue, and the like), wood, charcoal, compost, natural rubber, cotton, sugar cane, soy pulp, fats and oils (rapeseed oil, cottonseed oil, soybean oil, coconut oil, castor oil, and the like), carbohydrate-based crops (corn, potatoes, wheat, rice, chaff, rice bran, old rice, cassava, sago palm, and the like), bagasse, buckwheat, soybean, essential oil (pine oil, orange oil, eucalyptus oil, and the like), pulp black liquor, and vegetable oil residue. These may be used alone or in combination of two or more types.

Examples of the method for producing bioethanol include a method in which a biomass raw material is subjected to a pretreatment (pressurized hot water treatment, acid treatment, alkali treatment, and saccharification treatment using a saccharifying enzyme) as necessary, and then subjected to yeast fermentation to produce bioethanol, and then the bioethanol is purified through a distillation step and a dehydration step. When a saccharification treatment is performed in the production of bioethanol, successive saccharification fermentation in which saccharification and fermentation are performed stepwise may be used, or parallel saccharification fermentation in which saccharification and fermentation are simultaneously performed may be used, but it is preferable to produce bioethanol through parallel saccharification fermentation from the viewpoint of production efficiency.

The proportion of the biomass-derived ethylene structural unit in all the ethylene structural units constituting the EVOH resin is usually from 0.001 to 100 mol%, preferably from 5 to 98 mol%, more preferably from 15 to 97 mol%, still more preferably from 25 to 96 mol%, particularly preferably from 35 to 95 mol%, although all the ethylene structural units may be derived from biomass. The proportion of the fossil fuel-derived ethylene structural unit in all the ethylene structural units constituting the EVOH resin is usually 99.999 mol% or less, preferably 95 mol% or less, more preferably 85 mol% or less, still more preferably 75 mol% or less, particularly preferably 65 mol% or less. The lower limit value is 0 mol%, and the proportion is, for example, from 0 to 99.999 mol%. The fossil fuel-derived ethylene structural unit may not be contained in all the ethylene structural units. When the proportion of the biomass-derived ethylene structural unit increases in all the ethylene structural units constituting the EVOH resin, the biobased content in the present composition tends to increase, leading to reduction of environmental load. When the EVOH resin contains a biomass-derived vinyl ester structural unit and/or vinyl alcohol structural unit, the proportion of the biomass-derived ethylene structural unit in all the ethylene structural units may be 0.

As the vinyl ester other than the biomass-derived vinyl ester, vinyl acetate is typically used from the viewpoint of market availability and good impurity treatment efficiency at the time of production. Examples of the vinyl ester other than the vinyl acetate include aliphatic vinyl esters such as vinyl formate, vinyl propionate, vinyl valerate, vinyl butyrate, vinyl isobutyrate, vinyl pivalate, vinyl caprate, vinyl laurate, vinyl stearate, and vinyl versatate, and aromatic vinyl esters such as vinyl benzoate. An aliphatic vinyl ester that can be used has usually from 3 to 20 carbons, preferably from 4 to 10 carbons, and more preferably from 4 to 7 carbons. A single type of these is usually used alone; however, as necessary, a plurality of types of these may be used simultaneously.

Examples of the biomass-derived vinyl ester include vinyl esters produced using biomass-derived ethylene. Specific examples include vinyl acetate in which the carbon of the vinyl group moiety is derived from biomass.

Examples of the method for producing a biomass-derived vinyl ester include a method of reacting ethylene, acetic acid, and oxygen molecules using a palladium catalyst, which is a general industrial production method. The biomass-derived vinyl ester may be a vinyl ester produced using a biomass-derived carboxylic acid. When the saponification degree of the EVOH resin is not 100 mol%, an acyl group derived from biomass remains.

The proportion of the biomass-derived vinyl alcohol structural unit in all the vinyl alcohol structural units (vinyl ester structural units) constituting the EVOH resin is usually from 0.001 to 100 mol%, preferably from 5 to 98 mol%, more preferably from 15 to 97 mol%, still more preferably from 25 to 96 mol%, particularly preferably from 35 to 95 mol%. The proportion of the fossil fuel-derived vinyl alcohol structural unit in all the vinyl alcohol structural units constituting the EVOH resin is usually 99.999 mol% or less, preferably 95 mol% or less, more preferably 85 mol% or less, still more preferably 75 mol% or less, particularly preferably 65 mol% or less. The lower limit value is 0 mol%, and the proportion is, for example, from 0 to 99.999 mol%. The fossil fuel-derived vinyl alcohol structural unit may not be contained in all the vinyl alcohol structural units. When the proportion of the biomass-derived vinyl alcohol structural unit increases in all the vinyl alcohol structural units constituting the EVOH resin, the biobased content in the present composition tends to increase, leading to reduction of environmental load.

When the EVOH resin contains a biomass-derived ethylene structural unit, the proportion of the total of the biomass-derived vinyl ester structural unit and the biomass-derived vinyl alcohol structural unit to the total of the vinyl ester structural unit and the vinyl alcohol structural unit may be 0.

The fact that the EVOH resin is derived from biomass can be confirmed by determining the presence of "sulfur compound" and/or "carbon-14" in the present composition.

The "sulfur compound" and/or "carbon-14" is an impurity derived from biomass, and their presence cannot be confirmed in a petroleum-derived EVOH resin. Their presence can be confirmed because the EVOH resin is derived from biomass.

It is considered that EVOH resins have a problem with thermal stability, and it is presumed that the main cause of thermal decomposition is a polyene structure formed in the main chain of the EVOH resin through dehydration reaction starting from a hydroxyl group. It is presumed that the use of a biomass-derived EVOH resin in the present composition reduces the thermal decomposition rate of the EVOH resin itself because of the primary isotope effect of carbon-14 (increase in binding energy), thereby improving the thermal stability.

The ethylene structural unit content of the EVOH resin is usually from 20 to 60 mol%, preferably from 25 to 50 mol%, particularly preferably from 25 to 35 mol%. When the content is equal to or more than the lower limit value, excellent gas barrier properties under high humidity and melt moldability tend to be achieved, and conversely, when the content is equal to or less than the upper limit value, excellent gas barrier properties tend to be achieved.

In the present embodiment, the ethylene structural unit content of the EVOH resin means a value measured based on ISO14663.

The saponification degree of the EVOH resin is usually from 90 to 100 mol%, preferably from 95 to 100 mol%, more preferably from 99 to 100 mol%. When the saponification degree is equal to or more than the lower limit value, excellent gas barrier properties, thermal stability, moisture resistance, and the like tend to be achieved.

The saponification degree of the EVOH resin can be measured based on JIS K 6726 (provided that the EVOH resin is used in the form of a solution with the EVOH resin uniformly dissolved in a water/methanol solvent).

The melt flow rate (MFR) (at 210°C and a load of 2160 g) of the EVOH resin is usually from 0.5 to 100 g/10 min, preferably from 1 to 50 g/10 min, more preferably from 3 to 35 g/10 min. When the MFR is equal to or less than the upper limit value, the stability during film formation tends to be excellent, whereas when the MFR is equal to or more than the lower limit value, an appropriate viscosity is achieved, and the melt extrusion tends to be excellent.

The MFR is an index of the polymerization degree of the EVOH resin, and can be adjusted with the amount of a polymerization initiator or the amount of a solvent when ethylene and vinyl ester are copolymerized.

The biobased content of the EVOH resin is usually from 0.001 to 100%, preferably from 1 to 99%, more preferably from 20 to 86%, still more preferably from 38 to 76%, particularly preferably from 58 to 66%. The upper limit value is 100%.

The EVOH resin may further contain a structural unit derived from a comonomer described below within a range such that the effects of the present disclosure are not impaired (e.g., in an amount of 10 mol% or less of the EVOH resin).

Examples of the comonomer include olefins such as propylene, 1-butene, and isobutene; hydroxy group-containing $\alpha$-olefins such as 3-butene-1-ol, 3-butene-1,2-diol, 4-penten-1-ol, and 5-hexene-1,2-diol, and derivatives thereof such as esterified products and acylated products thereof; hydroxyalkyl vinylidenes such as 2-methylenepropane-1,3-diol and 3-methylenepentane-1,5-diol; hydroxyalkyl vinylidene diacetates such as 1,3-diacetoxy-2-methyleneepropane, 1,3-dipropionyloxy-2-methyleneepropane, and 1,3-dibutyryloxy-2-methyleneepropane; unsaturated acids such as acrylic acid, methacrylic acid, crotonic acid, phthalic acid (anhydride), maleic acid (anhydride), and itaconic acid (anhydride), salts thereof, or mono- or dialkyl esters thereof having an alkyl group with 1 to 18 carbons; acrylamides such as acrylamide, N-alkylacrylamides having an alkyl group with 1 to 18 carbons, N,N-dimethylacrylamide, 2-acrylamidopropane sulfonic acid or salts thereof, and acrylamidopropyldimethylamine or acid salts thereof, or quaternary salts thereof; methacrylamides such as methacrylamide, N-alkylmethacrylamides having an alkyl group with 1 to 18 carbons, N,N-dimethylmethacrylamide, 2-methacrylamidopropane sulfonic acid or salts thereof, and methacrylamidopropyldimethylamine or acid salts thereof, or quaternary salts thereof; N-vinylamides such as N-vinylpyrrolidone, N-vinylformamide, and N-vinylacetamide; vinyl cyanides such as acrylonitrile and methacrylonitrile; vinyl ethers, such as alkyl vinyl ethers having an alkyl group with 1 to 18 carbons, hydroxyalkyl vinyl ethers, and alkoxyalkyl vinyl ethers; halogenated vinyl compounds such as vinyl chloride, vinylidene chloride, vinyl fluoride, vinylidene fluoride, and vinyl bromide; vinyl silanes such as trimethoxyvinylsilane; halogenated allyl compounds such as allyl acetate and allyl chloride; allyl alcohols such as allyl alcohol and dimethoxyallyl alcohol; and comonomers such as trimethyl-(3-acrylamido-3-dimethylpropyl)-ammonium chloride and acrylamido-2-methylpropane sulfonic acid. These may be used alone or in combination of two or more types.

In particular, hydroxy group-containing $\alpha$-olefins are preferred, and 3-butene-1,2-diol and 5-hexene-1,2-diol are particularly preferred. In a case where the hydroxy group-containing $\alpha$-olefins are copolymerized, the resulting EVOH resin has a primary hydroxyl group in a side chain. Such an EVOH resin having a primary hydroxyl group in a side chain, particularly an EVOH resin having a 1,2-diol structure in a side chain, is preferred because good secondary moldability is achieved while gas barrier properties are maintained.

When the EVOH resin has a primary hydroxyl group in a side chain, the content of the structural unit derived from the monomer having a primary hydroxyl group is usually from 0.1 to 20 mol%, preferably from 0.5 to 15 mol%, particularly preferably from 1 to 10 mol% of the EVOH resin.

As the EVOH resin, a "post-modified" EVOH resin, such as an esterified, urethanized, acetalized, cyanoethylated, or oxyalkylenated EVOH resin, may also be used.

In a case where the post-modified EVOH resin is used, the modification rate thereof is usually 10 mol% or less, and preferably 4 mol% or less. The lower limit is usually 0.01 mol% or more, preferably 0.1 mol% or more, and it is, for example, from 0.01 to 10 mol%, preferably from 0.1 to 4 mol%. When the modification rate of the EVOH resin is within the range described above, excellent thermal degradation prevention properties and long-run properties tend to be achieved.

Further, the EVOH resin may be a mixture of EVOH resins having different contents of ethylene structural units, saponification degrees, polymerization degrees, copolymerization components, and the like.

As described above, the EVOH resin used in the present embodiment is obtained by saponifying a copolymer of ethylene and vinyl ester, at least a portion of which is derived from biomass. As a polymerization method for copolymerization, any known polymerization method, for example, solution polymerization, suspension polymerization, emulsion polymerization, or the like can be used.

Examples of the polymerization solvent usually include lower alcohols such as methanol, ethanol, propanol, and butanol, and ketones such as acetone and methyl ethyl ketone. One type may be used alone, or two or more types may be used in combination. Methanol is industrially suitably used as the polymerization solvent.

The amount of the polymerization solvent used may be appropriately selected in accordance with the polymerization degree of the intended copolymer in consideration of the chain transfer constant of the polymerization solvent. For example, when the polymerization solvent is methanol, the amount of the polymerization solvent is selected from the range of S (polymerization solvent)/M (monomer) = from 0.01 to 10 (mass ratio), preferably from about 0.05 to 7 (mass ratio).

Examples of the polymerization catalyst include known radical polymerization catalysts such as azobisisobutyronitrile, acetyl peroxide, benzoyl peroxide, and lauryl peroxide, and low-temperature active radical polymerization catalysts. Examples of the low-temperature active radical polymerization catalyst include peroxy esters such as t-butylperoxy neodecanoate, t-butylperoxy pivalate, $\alpha,\alpha'$-bis(neodecanoylperoxy)diisopropylbenzene, cumylperoxy neodecanoate, 1,1,3,3,-tetramethylbutylperoxy neodecanoate, 1-cyclohexyl-1-methylethylperoxy neodecanoate, t-hexylperoxy neodecanoate, and t-hexylperoxy pivalate, peroxy dicarbonates such as di-n-propylperoxy dicarbonate, di-isopropylperoxy dicarbonate, di-sec-butylperoxy dicarbonate, bis(4-t-butylcyclohexyl)peroxy dicarbonate, di-2-ethoxyethylperoxy dicarbonate, di(2-ethylhexyl)peroxy dicarbonate, dimethoxybutylperoxy dicarbonate, di(3-methyl-3-methoxybutylperoxy) dicarbonate, organic peroxides such as diacyl peroxides such as 3,3,5-trimethylhexanoyl peroxide, diisobutyryl peroxide, and lauroyl peroxide, and azo compounds such as 2,2'-azobis-(2,4-dimethylvaleronitrile) and 2,2'-azobis-(4-methoxy-2,4-dimethylvaleronitrile). The low-temperature active radical polymerization catalyst means an organic compound having a half-life at 60°C of from 10 to 300 minutes. One type of these polymerization catalysts may be used alone, or two or more types thereof may be used in combination.

The amount of the polymerization catalyst to be used varies depending on the type of catalyst and cannot be determined unconditionally, but is optionally selected according to the polymerization rate. For example, when azobisisobutyronitrile or acetyl peroxide is used, the amount thereof is preferably from 0.001 to 0.2 parts by mass, more preferably from 0.005 to 0.1 parts by mass, relative to 100 parts by mass of the vinyl ester-based monomer.

As a method for introducing ethylene into the copolymer, normal ethylene pressure polymerization may be performed. The introduction amount thereof can be controlled by the pressure of ethylene. It cannot be said unconditionally because it depends on the intended content of the ethylene structural unit, but it is usually selected from the range of from 2.0 to 8.0 MPa.

The reaction temperature of the copolymerization reaction cannot be determined unconditionally because it depends on the polymerization solvent to be used and the pressure, but the reaction is usually performed at a temperature equal to or lower than the boiling point of the polymerization solvent, and the reaction temperature is usually preferably from 40 to 80°C, particularly preferably from 55 to 80°C. When the temperature is equal to or more than the lower limit value, polymerization proceeds appropriately, and thus it is not necessary to set a large amount of catalyst for shortening the polymerization time. Conversely, when the temperature is equal to or less than the upper limit value, excellent polymerization control tends to be achieved.

In the case of a batch type, the polymerization time is usually from 4 to 10 hours, more preferably from 6 to 9 hours. When the polymerization time is equal to or more than the lower limit value, there is a tendency that it is not necessary to increase the polymerization temperature or set a large amount of catalyst. Conversely, when the polymerization time is equal to or less than the upper limit value, excellent productivity tends to be achieved. In the case of the continuous type, the average residence time in the polymerization can is usually from 2 to 8 hours, more preferably from 2 to 6 hours. When the residence time is equal to or more than the lower limit value, there is a tendency that it is not necessary to increase the polymerization temperature or set a large amount of catalyst. Conversely, when the polymerization time is equal to or less than the upper limit value, excellent productivity tends to be achieved.

The polymerization rate is set as high as possible within a range in which polymerization control is possible from the viewpoint of productivity, and is preferably from 30 to 60%. When the polymerization rate is equal to or more than the lower limit value, productivity is excellent, and there is a tendency to prevent a large amount of unpolymerized vinyl ester-based monomer from remaining. Conversely, when the polymerization rate is equal to or less than the upper limit value, excellent polymerization control tends to be achieved.

The thus-obtained ethylene-vinyl ester copolymer is saponified, whereby the EVOH resin of the present embodiment can be obtained. The saponification is performed using a saponification catalyst in a state where the ethylene-vinyl ester copolymer obtained as described above is dissolved in an alcohol or a hydrous alcohol.

Examples of the alcohol include lower alcohols having from 1 to 5 carbons, such as methanol, ethanol, and propanol. One of these may be used alone, or two or more types of these may be used in combination. Among these, methanol is preferable.

The concentration of the ethylene-vinyl ester copolymer in the alcohol is appropriately selected depending on the viscosity, and is usually from 5 to 60 mass%.

Examples of the saponification catalyst include alkali catalysts such as hydroxides and alcoholates of alkali metals, such as sodium hydroxide, potassium hydroxide, sodium methylate, sodium ethylate, potassium methylate, and potassium ethylate; and acid catalysts such as sulfuric acid, hydrochloric acid, nitric acid, methanesulfonic acid, zeolite, and cation exchange resins. One of these may be used alone, or two or more types of these may be used in combination.

Among these, alkali catalysts such as hydroxides and alcoholates of alkali metals are preferable.

The temperature at which the saponification is performed is not limited, but is preferably from 20 to 140°C, and the saponification time is preferably from 1 to 5 hours.

The thus-produced EVOH resin may be at least partially derived from biomass, and the ethylene structural unit and/or the vinyl alcohol structural unit is preferably derived from biomass, and more preferably the vinyl alcohol structural unit is derived from biomass from the viewpoint of availability. Such an EVOH resin mainly contains an ethylene structural unit and a vinyl alcohol structural unit, and contains a slight amount of a vinyl ester structural unit remaining without being saponified as necessary. When the other comonomer is copolymerized, a structural unit derived from the comonomer is further contained.

In the present specification, the term "mainly" refers to the most abundant constituent in an object, and usually, the constituent is preferably 50 mass% or more, more preferably 60 mass% or more, still more preferably 70 mass% or more, particularly preferably 80 mass% or more, especially preferably 90 mass% or more, and it may be 100 mass%, in the object.

The EVOH resin produced by the aforementioned production method is contained in an alcohol solvent, and the content of the EVOH resin in the EVOH resin solution is preferably about from 10 to 50 mass% from the viewpoint of producing the EVOH resin pellets described below.

The EVOH resin used in the present composition may be the alcohol solution of the EVOH resin produced by the production method as it is, but is preferably in the form of pellets.

The shape and size of the pellets are preferably the same as the shape and size of the composition described below.

The produced pellets are preferably washed by a method of immersing the pellets in an aqueous solution of a chemical such as an acid and/or a salt thereof, and examples of the chemical include formic acid, acetic acid, adipic acid, phosphoric acid, boric acid, and salts thereof. Acetic acid is preferably used. Further, it is preferable to thereafter wash the pellets with water or the like.

Next, the pellets subjected to the chemical treatment and washing may be dried as appropriate, and as a drying method, it is preferable to dry the pellets using a fluidized hot air dryer or a stationary hot air dryer.

The pellets of the EVOH resin can be thus produced.

Titanium Compound

Examples of the titanium compound include inorganic titanium compounds and organic titanium compounds. The titanium compounds may be used alone or in combination of two or more types. Among these, an inorganic titanium compound is preferable.

Examples of the inorganic titanium compound include a titanium oxide, a titanium hydroxide, a titanium chloride, and an inorganic salt of titanium.

Examples of the titanium oxide include titanium(II) oxide, titanium(III) oxide, titanium(IV) oxide, and titanium suboxide.

Examples of the titanium hydroxide include titanium(III) hydroxide and titanium(IV) hydroxide.

Examples of the titanium chloride include titanium(III) chloride and titanium(IV) chloride.

Examples of the inorganic titanium salt include titanium phosphate and titanium sulfate.

Among these, titanium oxides are preferable, titanium(IV) oxide is more preferable, rutile-type titanium(IV) oxide is particularly preferable.

Examples of the organic titanium compound include titanium carboxylates such as titanium acetate, titanium butyrate, and titanium stearate.

The titanium compound may be present as a titanium compound in the composition, or may be present in an ionized state or in a complex state in which the titanium compound is caused to interact with the EVOH resin or another ligand.

The average particle size of the titanium compound is usually from 0.001 to 100 $\mu$m, preferably from 0.01 to 50 $\mu$m, more preferably from 0.015 to 20 $\mu$m. When the average particle size of the titanium compound is in the range described above, more excellent coloring suppression effect tends to be achieved. Examples of the method for measuring the average particle size include a dynamic light scattering (DLS) method and a sedimentation rate method. The average particle size can be determined by a predetermined method.

The content of the titanium compound in terms of metal is usually 0.0001 ppm or more and 5000 ppm or less, preferably from 0.0001 to 2 ppm, more preferably from 0.0005 to 1.5 ppm, still more preferably from 0.001 to 1 ppm, particularly preferably 0.005 ppm or more and less than 1 ppm, especially preferably from 0.01 to 0.8 ppm, yet especially preferably from 0.01 to 0.5 ppm, relative to the mass of the composition. When the content of the titanium compound is equal to or less than the upper limit value, the thermal decomposition of the EVOH resin is prevented, and excellent coloring prevention properties tend to be achieved. When the content is equal to or more than the lower limit value, the thermal degradation tends to be suppressed. The content of the titanium compound in terms of metal is the content of the titanium element.

The content of the titanium compound in terms of metal can be determined by weighing the present composition in a platinum crucible, sequentially ashing the present composition with a burner and an electric furnace, thermally decomposing the ashed product with nitric acid and hydrofluoric acid, treating the decomposed product with a mixed acid of dilute nitric acid and dilute hydrofluoric acid, and measuring the titanium in a constant volume liquid obtained by fixing the volume of the treated material by ICP mass spectrometry using an ICP mass spectrometer (Agilent 8800, available from Agilent Technologies).

Alkali Metal Compound

Examples of the alkali metal compound include salts and hydroxides of alkali metals. One of these may be used alone, or two or more types of these may be used in combination. Among these, the alkali metal compound is preferably a water-soluble alkali metal compound, and an alkali metal salt is preferable from the viewpoint of dispersibility.

Examples of the alkali metal salt include an inorganic salt of an alkali metal, and a carboxylate of an alkali metal. Among these, a carboxylate of an alkali metal is preferable.

Examples of the inorganic salt of an alkali metal include carbonates, hydrogen carbonates, phosphates, borates, sulfates, and chlorides of alkali metals.

Examples of the carboxylate of an alkali metal include monocarboxylates having from 2 to 11 carbons such as acetate, butyrate, propionate, enanthate, and caprate; dicarboxylates having from 2 to 11 carbons such as oxalate, malonate, succinate, adipate, suberate, and sebacate; monocarboxylates having 12 or more carbons such as laurate, palmitate, stearate, 12-hydroxystearate, behenate, and montanate; and carboxylates such as carboxylates with a polymerization terminal carboxy group of the EVOH resin. Among these, monocarboxylates having 2 to 11 carbons are preferable, and acetate is particularly preferable.

Examples of the alkali metal species of the alkali metal compound include lithium, sodium, potassium, rubidium, and cesium. Among these, sodium and potassium are preferable, and sodium is particularly preferable.

The molecular weight of the alkali metal compound is usually from 20 to 10000, preferably from 20 to 1000, particularly preferably from 20 to 500.

Among these, sodium acetate is preferable as the alkali metal compound. In addition, the alkali metal compound preferably excludes an inorganic layered compound and a double salt from the viewpoint of economic efficiency and dispersibility.

The content of the alkali metal compound in terms of metal is preferably from 5 to 50000 ppm, more preferably from 10 to 45000 ppm, still more preferably from 20 to 30000 ppm, particularly preferably from 40 to 20000 ppm, especially preferably from 80 to 10000 ppm, relative to the mass of the composition.

When the content of the alkali metal compound is equal to or less than the upper limit value, excellent thermal stability tends to be achieved, whereas when the content is equal to or more than the lower limit value, excellent moldability of the composition tends to be achieved.

The content of the alkali metal compound in terms of metal can be measured with an atomic absorption spectrophotometer, for example using a test liquid prepared by adding pure water to a solution obtained by subjecting a heated and ashed product of the present composition to an acid treatment with hydrochloric acid or the like to fix the volume. The content of the alkali metal compound in terms of metal is the content of the alkali metal element.

The mass ratio of the content of the alkali metal compound in terms of metal to the content of the titanium compound in terms of metal is usually from 500 to 280000, preferably from 800 to 250000, more preferably from 1000 to 230000, particularly preferably from 1000 to 200000. When the value of the mass ratio is equal to or less than the upper limit value, there is a tendency that coloring is easily suppressed, whereas when the mass ratio is equal to or more than the lower limit value, an effect of suppressing thermal degradation tends to be achieved.

It is generally known that an EVOH resin containing an alkali metal compound tends to decrease in viscosity with time during heating. Although the mechanism is not clear, it is presumed that the composition becomes basic by blending an alkali metal compound, and any anion becomes a nucleophilic agent to cause a decomposition reaction of the main chain by, for example, withdrawing hydrogen bound to the main chain carbon of the EVOH resin, thereby cutting the main chain of the EVOH resin. The deterioration of the EVOH resin after heating is presumed to be caused by the formation of a double bond structure in the main chain of the EVOH resin during the reaction, the double bond structure serving again as a reaction starting point of the dehydration reaction or the like, which forms a polyene structure in the main chain of the EVOH resin.

In contrast, the present composition contains a titanium compound and an alkali metal compound at a specific mass ratio, and thus, the decrease in the thermal stability of the EVOH resin is suppressed. Usually, it is considered that when a titanium compound is contained in a composition, the composition is colored by titanium ions, and thus, it is common technical knowledge for those skilled in the art to avoid the use of a titanium compound.

However, in the present embodiment, it has been found that, contrary to such common technical knowledge, the composition having excellent thermal stability can be obtained by incorporating a titanium compound and an alkali metal compound, and further, by using them at a specific mass ratio.

That is, titanium is stable as a tetravalent ion, is coordinated to the double bond of the main chain of the EVOH resin, and is stabilized by forming a chelate or the like. Thus, it is presumed that the formation of a polyene structure in the main chain of the EVOH resin is suppressed.

Meanwhile, it is considered that when the amount of the titanium compound is within the specific range, the deterioration of the EVOH resin due to thermal decomposition caused by titanium tends to be suppressed.

Additional Thermoplastic Resin

The present composition can contain a thermoplastic resin other than the EVOH resin within a range such that the effects of the present disclosure are not impaired (for example, usually 50 mass% or less, preferably 30 mass% or less, more preferably 20 mass% or less, particularly preferably 10 mass% or less of the present composition. The lower limit value is 0 mass%, for example, from 0 to 50 mass%). As the additional thermoplastic resin, a known thermoplastic resin can be used, and examples thereof include polyester-based resins, polystyrene-based resins, polyvinyl chloride-based resins, polycarbonate-based resins, ionomers, polyvinylidene chloride, polyester-based elastomers, polyurethane-based elastomers, chlorinated polyethylene, and chlorinated polypropylene. These may be used alone or in combination of two or more types.

Additional Compounding Agent

The present composition may contain a compounding agent (the compounding agent as used herein is used in the sense of excluding the titanium compound and the alkali metal compound) that is generally blended in EVOH resins, within a range such that the effects of the present disclosure are not impaired (for example, 5 mass% or less, preferably 3 mass% or less, the lower limit value is 0 mass%, for example, from 0 to 5 mass%). Examples of the compounding agent that may be blended include inorganic double salts (e.g., hydrotalcite), plasticizers (e.g., aliphatic polyhydric alcohols such as ethylene glycol, glycerin, and hexanediol), oxygen absorbers [e.g., inorganic oxygen absorbers such as aluminum powder and potassium sulfite; ascorbic acid, fatty acid esters and metal salts thereof, gallic acid, polyhydric phenols such as hydroxyl group-containing phenolaldehyde resins, terpene compounds, blends of tertiary hydrogen-containing resins and transition metals (e.g., a combination of polypropylene and cobalt), blends of carbon-carbon unsaturated bond-containing resins and transition metals (e.g., a combination of polybutadiene and cobalt), photo-oxidative degradation resins (e.g., polyketone), anthraquinone polymers (e.g., polyvinylanthraquinone), and polymer-based oxygen absorbers such as those obtained by adding photoinitiators (benzophenone and the like), antioxidants other than the above, and deodorants (activated carbon and the like) to these blended materials], heat stabilizers (boric acid, phosphoric acid), light stabilizers, ultraviolet absorbers, colorants, antistatic agents, surfactants (excluding those used as lubricants), antibacterial agents, anti-blocking agents, and filling agents (e.g., aluminum and inorganic fillers). One of these compounds may be used alone or two or more types thereof may be used in combination.

Method for Producing Composition

The present composition can be produced by, for example, mixing the EVOH resin, a titanium compound, and an alkali metal compound by a known method, for example, a dry blending method, a melt mixing method, a solution mixing method, an impregnation method, or the like, and among these, it is preferable to produce the present composition by a method including a step of mixing the EVOH resin and the titanium compound. Furthermore, these production methods can be optionally combined.

Examples of the dry blending method include (i) a method of dry-blending a pellet-shaped EVOH resin and a titanium compound and/or an alkali metal compound using a tumbler or the like.

Examples of the melt mixing method include (ii) a method of melt-kneading a dry blend obtained by dry-blending a pellet-shaped EVOH resin and a titanium compound and/or an alkali metal compound, and (iii) a method of melt-kneading a titanium compound and/or an alkali metal compound added to a molten EVOH resin.

Examples of the solution mixing method include (iv) a method of preparing a solution using a commercially available EVOH resin, blending a titanium compound and/or an alkali metal compound therein, performing solidification molding, then performing solid-liquid separation with a known means, and drying the obtained product; and (v) a method of, in the process of producing an EVOH resin, incorporating a titanium compound and/or an alkali metal compound in an ethylene-vinyl ester copolymer solution or a uniform solution of the EVOH resin (water/alcohol solution or the like) before saponification, performing solidification molding, then performing solid-liquid separation with a known means, and drying the obtained product.

Examples of the impregnation method include (vi) a method of bringing a pellet-shaped EVOH resin into contact with an aqueous solution containing a titanium compound and/or an alkali metal compound, incorporating the titanium compound and/or the alkali metal compound in the EVOH resin, and then drying the EVOH resin.

As the aqueous solution containing a titanium compound, an aqueous solution of a titanium compound or an aqueous solution obtained by immersing a titanium compound in water containing various chemicals to elute titanium ions can be used.

In the impregnation method, the content of the titanium compound (in terms of metal) can be controlled with the concentration of the titanium compound in the aqueous solution in which the EVOH resin is immersed, the immersion temperature, the immersion time, and the like.

The immersion time is usually from 0.5 to 48 hours, preferably from 1 to 36 hours, and the immersion temperature is usually from 10 to 40°C, preferably from 20 to 35°C.

As the drying method in each of the above production methods, various drying methods can be employed, and either static drying or fluidized drying may be employed. These methods can be performed in combination.

As described above, in the present embodiment, the above different methods can be combined. Among those, a melt-mixing method is preferable, and the method (ii) is particularly preferable, from the viewpoint of productivity and producing a resin composition that exhibits more significant effects of the present disclosure. In a case where the additional thermoplastic resin and an additional compounding agent are used, they are blended by a common process according to the aforementioned production method.

The present composition produced by each of the production methods described above may be in any form, but is preferably in the form of pellets.

The pellets may be in, for example, a spherical, oval, cylindrical, dice shape, or rectangular parallelepiped shape, but are usually in an oval or cylindrical shape. From the viewpoint of convenience in the subsequent use as a molding material, in the case of oval pellets, a minor axis length is usually from 1 to 10 mm, preferably from 2 to 6 mm, more preferably from 2.5 to 5.5 mm, and a major axis length is usually from 1.5 to 30 mm, preferably from 3 to 20 mm, more preferably from 3.5 to 10 mm. In the case of cylindrical pellets, the bottom surface has a diameter of usually from 1 to 6 mm and preferably from 2 to 5 mm, and the length is usually from 1 to 6 mm and preferably from 2 to 5 mm. In the case of a dice shape, one side is usually from 1 to 6 mm, preferably from 2 to 5 mm.

The shape and size of the pellet-shaped EVOH resin used in each of the production methods are preferably the same.

The water content of the present composition is not particularly limited, but is usually from 0.01 to 0.5 mass%, preferably from 0.05 to 0.35 mass%, particularly preferably from 0.1 to 0.3 mass%.

The water content of the present composition is measured and calculated by the following method.

The mass ($W_1$) of the present composition before drying is weighed with an electronic balance, after which the composition is dried in a hot air dryer at 150°C for 5 hours and then cooled in a desiccator for 30 minutes, and then the mass ($W_2$) after cooling is weighed. The water content is calculated from the following formula.

Formula

$$\text{Water content (mass\%)} = [(W_1 - W_2)/W_1] \times 100$$

When the present composition is in the form of pellets, preferably, a known lubricant is adhered to the surface of the pellets from the viewpoint of stabilizing the feed properties during melt molding. Examples of the type of lubricant include higher fatty acids having 12 or more carbons (e.g., lauric acid, myristic acid, palmitic acid, stearic acid, behenic acid, and oleic acid), higher fatty acid esters (e.g., methyl esters, isopropyl esters, butyl esters, and octyl esters of higher fatty acids), higher fatty acid amides (e.g., saturated higher fatty acid amides, such as lauramide, myristamide, palmitamide, stearamide, and behenamide; unsaturated higher fatty acid amides, such as oleamide and erucamide; and bis higher fatty acid amides, such as ethylene bis(stearamide), ethylene bis(oleamide), ethylene bis(erucamide), and ethylene bis(lauramide)), low-molecular-weight polyolefins (e.g., low-molecular-weight polyethylene having a molecular weight of approximately 500 to 10000, or low-molecular-weight polypropylene, or acid-modified products thereof), higher alcohols having 6 or more carbons, ester oligomers, and ethylene fluoride resins. One of these compounds may be used alone or two or more types thereof may be used in combination. The content of the lubricant is usually 5 mass% or less and preferably 1 mass% or less of the present composition. The lower limit is usually 0 mass%, for example, from 0 to 5 mass%.

The present composition thus produced is excellent in thermal stability, and the ratio ("1058" + "1059" + "1060")/("1314" + "1315") of the sum of the color number "1058" (R: 72, G: 40, B: 40), the color number "1059" (R: 72, G: 40, B: 56), and the color number "1060" (R: 72, G: 40, B: 72) to the sum of the color number "1314" (R: 88, G: 40, B: 40) and the color number "1315" (R: 88, G: 40, B: 56) measured using a visual analyzer IRIS VA400 (available from Alpha mos) of the present composition is usually 1.8 or less, preferably 1.4 or less, more preferably 1 or less. The lower limit value is usually 0, for example, usually from 0 to 1.8.

As the ratio is smaller, coloring associated with thermal degradation is suppressed, and thermal stability tends to be higher.

The difference of 0.1 in the ratio appears as a large difference in yield in actual production, and thus the difference is very large.

Molding Material

The present composition thus produced is prepared into various forms such as a pellet, a powder form, or a liquid form, and is provided as a molding material for various molded products. In particular, in the present embodiment, in a case where the present EVOH resin composition is provided as a material for use in melt molding, the effects of the present disclosure tend to be more efficiently achieved, which is preferable.

Examples of the molded product include a single layer film molded from the present composition, and a multilayer structure having a layer composed of the present composition.

Multilayer Structure

A multilayer structure according to an embodiment of the present disclosure (hereinafter, referred to as "present multilayer structure") contains the present composition and includes at least one layer composed of the present composition. The layer composed of the present composition in the present multilayer structure (hereinafter, referred to simply as "present composition layer") may be a single layer or a plurality of layers. When the present composition layer is laminated with an additional substrate containing a thermoplastic resin other than the EVOH resin as a main component (hereinafter, the resin used for the substrate may be abbreviated as "substrate resin"), it is possible to further impart strength, protect the present composition layer from the influence of moisture or the like, or impart other functions.

Examples of the substrate resin include polyethylene-based resins, such as linear low-density polyethylene, low-density polyethylene, ultra-low-density polyethylene, medium-density polyethylene, high-density polyethylene, ethylene-propylene (block and random) copolymers, and ethylene-$\alpha$-olefin ($\alpha$-olefin having from 4 to 20 carbons) copolymers; polypropylene-based resins, such as polypropylene and propylene-$\alpha$-olefin ($\alpha$-olefin having from 4 to 20 carbons) copolymers; polyolefin-based resins in a broad sense including (unmodified) polyolefin-based resins, such as polybutene, polypentene, polycyclic olefin-based resins (polymers having a cyclic olefin structure in at least one of a main chain or a side chain), and modified olefin-based resins, such as unsaturated carboxylic acid-modified polyolefin-based resins in which any of polyolefins described above is graft-modified with an unsaturated carboxylic acid or its ester; ionomers; ethylene-vinyl acetate copolymers; ethylene-acrylic acid copolymers; ethylene-acrylate copolymers; polyester-based resins; polyamide-based resins (including copolymerized polyamides); poly(vinyl chloride); poly(vinylidene chloride); acrylic-based resins; polystyrene-based resins; vinyl ester-based resins; polyester-based elastomers; polyurethane-based elastomers; polystyrene-based elastomers; halogenated polyolefins, such as chlorinated polyethylene and chlorinated polypropylene; and aromatic or aliphatic polyketones. One of these may be used alone or two or more types thereof may be used in combination.

Among these, polyamide-based resins, polyolefin-based resins, polyester-based resins, and polystyrene-based resins, which are hydrophobic resins, are preferable. Polyolefin-based resins such as polyethylene-based resins, polypropylene-based resins, polycyclic olefin-based resins, and unsaturated carboxylic acid-modified polyolefin-based resins thereof are more preferable.

When the present composition layer is denoted by a (a1, a2, ...), and the substrate resin layer is denoted by b (b1, b2, ...), the layer configuration of the present multilayer structure may be any combination such as a/b, b/a/b, a/b/a, a1/a2/b, a/b1/b2, b2/b1/a/b1/b2, or b2/b1/a/b1/a/b1/b2. When a recycled layer containing a mixture of the present composition and a thermoplastic resin other than the EVOH resin, which is produced by remelt-molding an end, a defective product, or the like generated in the process of producing the present multilayer structure, is denoted by R, the layer configuration can also be b/R/a, b/R/a/b, b/R/a/R/b, b/a/R/a/b, b/R/a/R/a/R/b, or the like. The number of layers of the present multilayer structure is usually from 2 to 15, preferably from 3 to 10, in terms of the total number. In the layer configuration described above, an adhesive resin layer containing an adhesive resin may be interposed between the layers as necessary.

As the adhesive resin, a known adhesive resin can be used, and the adhesive resin may be appropriately selected according to the type of thermoplastic resin used for the substrate resin layer "b". Typical examples of the adhesive resin include carboxyl group-containing modified polyolefin-based polymers produced by chemically bonding an unsaturated carboxylic acid or anhydride thereof to a polyolefin-based resin by an addition reaction, a graft reaction, or the like. Examples of the carboxy group-containing modified polyolefin-based polymers include maleic anhydride graft-modified polyethylene, maleic anhydride graft-modified polypropylene, maleic anhydride graft-modified ethylene-propylene (block and random) copolymers, maleic anhydride graft-modified ethylene-ethyl acrylate copolymers, maleic anhydride graft-modified ethylene-vinyl acetate copolymers, maleic anhydride-modified polycyclic olefin-based resins, and maleic anhydride graft-modified polyolefin-based resins. One of these may be used alone, or two or more types of these may be used in combination.

In the present multilayer structure, when an adhesive resin layer is used between the present composition layer and the substrate resin layer, the adhesive resin layer is positioned on both sides of the present composition layer, and thus use of an adhesive resin having excellent hydrophobicity is preferable.

A known plasticizer, filler, clay (such as montmorillonite), colorant, antioxidant, antistatic agent, lubricant, nucleating agent, anti-blocking agent, wax, or the like may be contained in the substrate resin and adhesive resin within a range such that the subject matter of the present disclosure is not impeded (e.g., usually 30 mass% or less, preferably 10 mass% or less, and the lower limit value is 0 mass%, for example, from 0 to 30 mass%, relative to the total amount of the resin). These may be used alone or in combination of two or more types.

The lamination of the present composition layer and the substrate resin layer (including a case of interposing an adhesive resin layer therebetween) can be performed by a known method. Examples thereof include a method of melt-extrusion-laminating the substrate resin onto a film, a sheet, or the like of the present composition, a method of melt-extrusion-laminating the present composition onto the substrate resin layer, a method of co-extruding the present composition and the substrate resin, a method of dry-laminating the present composition (layer) and the substrate resin (layer) using a known adhesive such as an organic titanium compound, an isocyanate compound, a polyester-based compound, or a polyurethane compound, and a method of applying a solution of the present composition onto the substrate resin and then removing the solvent. Among these, production is preferably performed by a method including a step of melt molding a layer containing the present composition layer, and specifically by a co-extrusion method, from the viewpoints of cost and the environment.

The present multilayer structure may be subjected to a stretching treatment (with heating) as necessary. The stretching treatment may be either uniaxial stretching or biaxial stretching. In the case of biaxial stretching, simultaneous stretching or sequential stretching may be performed. A stretching method with a high stretching ratio can be employed among a roll stretching method, a tenter stretching method, a tubular stretching method, a stretch blowing method, and vacuum-pressure molding. The stretching temperature is a temperature near the melting point of the multilayer structure and is selected from a range of usually from 40 to 170°C and preferably about from 60 to 160°C. When the stretching temperature is equal to or higher than the lower limit value, excellent stretchability tends to be achieved, whereas when the stretching temperature is equal to or lower than the upper limit value, a stable stretched state tends to be easily maintained.

The present multilayer structure after the stretching treatment may be subjected to heat setting for the purpose of imparting dimensional stability. The heat setting can be carried out by a well-known means; for example, the stretch-treated present multilayer structure is heat-treated usually at a temperature of 80 to 180°C and preferably at a temperature of 100 to 165°C usually for about 2 to 600 seconds while the stretch-treated present multilayer structure is kept in a state of tension.

In the case of using the stretch-treated present multilayer structure as a shrink film, in order to impart heat shrinkability, the stretch-treated present multilayer structure is not subjected to the heat setting described above, but subjected to a treatment such as application of cool air to the present multilayer structure after the stretching treatment to cool-set the structure.

The thickness of the present multilayer structure (including a stretched multilayer structure), and the thicknesses of the present composition layer, the substrate resin layer, and the adhesive resin layer constituting the multilayer structure cannot be determined unconditionally because they depend on the layer configuration, the type of the substrate resin, the type of the adhesive resin, the application, the packaging form, the required physical properties, and the like, but the thickness of the present multilayer structure (including a stretched multilayer structure) is usually from 10 to 5000 μm, preferably from 30 to 3000 μm, particularly preferably from 50 to 2000 μm. The thickness of the present composition layer is usually from 1 to 500 μm, preferably from 3 to 300 μm, particularly preferably from 5 to 200 μm, the thickness of the substrate resin layer is usually from 5 to 3000 μm, preferably from 10 to 2000 μm, particularly preferably from 20 to 1000 μm, and the thickness of the adhesive resin layer is usually from 0.5 to 250 μm, preferably from 1 to 150 μm, particularly preferably from 3 to 100 μm.

Further, the thickness ratio of the present composition layer to the substrate resin layer (the present composition layer/the substrate resin layer) in the present multilayer structure is usually from 1/99 to 50/50, preferably from 5/95 to 45/55, particularly preferably from 10/90 to 40/60, in terms of the ratio of the thickest layers to each other when there is a plurality of layers for each type of layer. The thickness ratio of the present composition layer to the adhesive resin layer (the present composition layer/the adhesive resin layer) in the present multilayer structure is usually from 10/90 to 99/1, preferably from 20/80 to 95/5, particularly preferably from 50/50 to 90/10, in terms of the ratio of the thickest layers to each other when there is a plurality of layers for each type of layer.

Molded Body

It is also possible to produce a cup or tray-shaped molded body using the present multilayer structure. In such a case, a draw molding method is usually employed, and specific examples include a vacuum molding method, a pressure molding method, a vacuum-pressure molding method, and a plug assist vacuum-pressure molding method. Furthermore, in the case of producing a tube- or bottle-form multilayer container (laminate structure) from a multilayer parison (a hollow tubular preform before blowing), a blow molding method is employed. Specific examples include extrusion blow molding methods (such as a twin-head type, a mold moving type, a parison shift type, a rotary type, an accumulator type, and a horizontal parison type), a cold parison blow molding method, an injection blow molding method, and biaxial stretch blow molding methods (such as an extrusion cold parison biaxial stretch blow molding method, an injection cold parison biaxial stretch blow molding method, and an injection molding in-line biaxial stretch blow molding method). As necessary, the resulting laminate may be subjected to processes such as a heat treatment, a cooling treatment, rolling, printing, dry lamination, solution or melt coating, bag-making, deep drawing, box processing, tube processing, and splitting.

Packaging Body

A single layer film molded from the present composition or a packaging body such as a container or a lid member composed of the present multilayer structure, such as a bag, a cup, a tray, a tube, a bottle or the like is useful for various types of packaging material containers (e.g., a food packaging body, a drug packaging body, or a cosmetic packaging body) for, for example, seasonings such as mayonnaise and dressing, fermented foods such as miso, oil and/or fat foods such as salad oil, beverages, cosmetics, and pharmaceuticals, in addition to general food products.

Examples

Hereinafter, the present disclosure will be more specifically described with reference to Examples, but the present disclosure is not limited to the Examples below as long as it does not deviate from the gist of the present disclosure. In the Examples, "parts" and "%" are based on mass.

Prior to Examples, the EVOH resin described below was prepared.

Production of Ethylene-Vinyl Acetate Copolymer

A polymerization can was charged with 100 parts of vinyl acetate in which the carbon of a vinyl group moiety was derived from biomass, and 16 parts of methanol. The inside of the system was once replaced with a nitriding gas, and then replaced with ethylene, and the ethylene was press-fitted until the ethylene pressure reached 4.12 MPa. The mixture was heated to 67°C under ethylene pressure with stirring and caused to react for a total of 6 hours while charging a peroxyester at a rate of 0.05 parts/hr for 4 hours, to thereby produce an ethylene-vinyl acetate copolymer. The polymerization rate of the ethylene-vinyl acetate copolymer thus produced was 56%.

Production of EVOH Resin

To 100 parts of a methanol solution containing 50% of the ethylene-vinyl acetate copolymer, 70 parts of a methanol solution containing 0.02 equivalents of sodium hydroxide relative to residual vinyl acetate groups in the copolymer was supplied, and saponification reaction was performed at 80°C for 80 minutes.

Next, 100 parts of an aqueous methanol solution having a water content of 50% was supplied to a methanol solution of the EVOH resin in an azeotropic state, and methanol was distilled out until the resin content concentration in the methanol/aqueous solution of the EVOH resin reached 40%, to thereby produce a completely transparent methanol/water uniform solution of EVOH resin.

Subsequently, the produced methanol/aqueous solution of EVOH resin was solidified into a thin plate shape and then cut with a knife to produce dice-shaped pellets each having a side of 3 mm.

The produced dice-shaped pellets were washed with 250 parts of treatment water containing 5 parts of acetic acid relative to 100 parts of the pellets for 30 minutes. The washing was performed three times by replacing the treatment water. Then, 100 parts of the resultant dice pellets were washed with 250 parts of water for 30 minutes. The washing was performed twice by replacing water. Subsequently, the resultant dice pellets were dried at 118°C for 8 hours under a nitriding airflow having an oxygen concentration of 0.5 vol% or less, to thereby produce pellets of an EVOH resin (ethylene structural unit content: 32 mol%, saponification degree: 99.7 mol%, biobased content: 64% (content of bio-vinyl alcohol structural unit in the entire vinyl alcohol structural unit: 94%)).

Example 1

Production of Composition Pellets Containing Titanium Compound and Alkali Metal Compound

There were used the produced EVOH resin pellets, rutile type titanium(IV) oxide (available from FUJIFILM Wako Pure Chemical Corporation) having an average particle size of 5 $\mu$m or less as a titanium compound, and sodium acetate (available from FUJIFILM Wako Pure Chemical Corporation) as an alkali metal compound.

Melt kneading was performed under kneading conditions described below with a tabletop kneader "Xplore-HTMC 15HT (15 mL volume)" (available from Rheolab Ltd.) so that in the EVOH resin pellets, the content of titanium oxide in terms of metal was 0.04 ppm relative to the mass of the composition, and the content of sodium acetate in terms of metal was 8000 ppm relative to the mass of the composition, and extruded and discharged strands were cooled and solidified by air cooling to produce composition pellets.

Kneading Conditions

- Small kneader temperature: 200°C
- Screw shape: biaxial conical type
- Screw rotation: same direction
- Kneading time: 10 minutes

Example 2

A composition was produced in the same manner as in Example 1 except that the content of sodium acetate in terms of metal was changed to 40 ppm relative to the mass of the composition in Example 1.

Example 3

A composition was produced in the same manner as in Example 1, except that the content of titanium oxide in terms of metal was changed to 0.1 ppm relative to the mass of the composition, and the content of sodium acetate in terms of metal was changed to 200 ppm relative to the mass of the composition in Example 1.

Comparative Example 1

A composition was produced in the same manner as in Example 1 except that the content of sodium acetate in terms of metal was changed to 4 ppm relative to the mass of the composition in Example 1.

Comparative Example 2

A composition was produced in the same manner as in Example 1 except that the content of sodium acetate in terms of metal was changed to 12000 ppm relative to the mass of the composition in Example 1.

Comparative Example 3

A composition was produced in the same manner as in Example 3 except that the content of sodium acetate in terms of metal was changed to 40 ppm relative to the mass of the composition in Example 3.

The produced compositions of Examples 1 to 3 and Comparative Examples 1 to 3 were subjected to the thermal stability evaluation described below. The results are shown in Table 1 below.

Thermal Stability Evaluation

The produced composition was cut with a nipper, and the resultant pulverized product was used as a sample. The sample was heated at 150°C for 5 hours with a vacuum dryer Vacuum Drying Over DP22 (available from Taihei Rika Kogyo Co., Ltd.), and then the ratio ("1058" + "1059"+ "1060")/("1314" + "1315") of the sum of the color number "1058" (R: 72, G: 40, B: 40), the color number "1059" (R: 72, G: 40, B: 56), and the color number "1060" (R: 72, G: 40, B: 72) to the sum of the color number "1314" (R: 88, G: 40, B: 40) and the color number "1315" (R: 88, G: 40, B: 56) was evaluated using a visual analyzer IRIS VA400 (available from Alpha mos).

The color numbers "1314" and "1315" correspond to colors having a light yellow tint, and the color numbers "1058", "1059", and "1060" correspond to colors having a deep yellow tint. A smaller value of this ratio means suppression of yellow tint coloring due to thermal degradation, and higher thermal stability.

[Table 1]

| | Bio EVOH (%) | Content of titanium compound in terms of metal (ppm) | Content of alkali metal compound in terms of metal (ppm) | Content of alkali metal compound in terms of metal/content of titanium compound in terms of metal | Thermal Stability Evaluation (1058 + 1059 + 1060)/(1314 + 1315) |
|---|---|---|---|---|---|
| Example 1 | 100 | 0.04 | 8000 | 200000 | 1 |
| Example 2 | 100 | 0.04 | 40 | 1000 | 1 |
| Example 3 | 100 | 0.1 | 200 | 2000 | 1 |
| Comparative Example 1 | 100 | 0.04 | 4 | 100 | 2 |
| Comparative Example 2 | 100 | 0.04 | 12000 | 300000 | 2 |
| Comparative Example 3 | 100 | 0.1 | 40 | 400 | 2 |

The results shown in Table 1 indicate that the compositions of Examples 1 to 3 containing a titanium compound and an alkali metal compound at a specific mass ratio have a lower proportion (specifically, lower by 50%) of deep yellow tint and excellent thermal stability as compared with the compositions of Comparative Examples 1 to 3 in which a titanium compound and an alkali metal compound are contained so that the mass ratio thereof is outside the specific mass ratio.

In addition, a multilayer structure having a layer composed of the composition of each of Examples 1 to 3 is also excellent in thermal stability, and a molded body and a food packaging body containing such a multilayer structure are also excellent in thermal stability.

Although specific embodiments of the present disclosure have been described in the above Examples, the above Examples are merely illustrative and are not to be construed as limiting. Various modifications apparent to those skilled in the art are intended to be within the scope of the present disclosure.

Industrial Applicability

The present composition is excellent in thermal stability. Thus, the present composition is useful as various packaging materials for various foods, seasonings such as mayonnaise and dressing, fermented foods such as miso, oil and/or fat foods such as salad oil, beverages, cosmetics, and pharmaceuticals.

**Claims**

1. A composition comprising an ethylene-vinyl alcohol copolymer, a titanium compound, and an alkali metal compound, wherein

   at least a portion of the ethylene-vinyl alcohol copolymer is derived from biomass, and
   a mass ratio of a content of the alkali metal compound in terms of metal to a content of the titanium compound in terms of metal is from 500 to 280000.

2. The composition according to claim 1, wherein the content of the titanium compound in terms of metal is 0.0001 ppm or more and 5000 ppm or less relative to a mass of the composition.

3. The composition according to claim 1 or 2, wherein the content of the titanium compound in terms of metal is 0.0001 ppm or more and 2 ppm or less relative to a mass of the composition.

4. The composition according to any one of claims 1 to 3, wherein the content of the titanium compound in terms of metal is 0.0001 ppm or more and less than 1 ppm relative to a mass of the composition.

5. The composition according to any one of claims 1 to 4, wherein the ethylene-vinyl alcohol copolymer has a biobased content of from 0.01 to 100%.

6. The composition according to any one of claims 1 to 5, wherein the ethylene-vinyl alcohol copolymer has a biobased content of from 1 to 99%.

7. A molding material comprising the composition according to any one of claims 1 to 6.

8. A multilayer structure comprising a layer containing the composition according to any one of claims 1 to 6.

9. The multilayer structure according to claim 8, further comprising an adhesive resin layer.

10. A molded body comprising the multilayer structure according to claim 8 or 9.

11. A food packaging body comprising the multilayer structure according to claim 8 or 9.

12. A method for producing the composition according to any one of claims 1 to 6, the method comprising mixing the ethylene-vinyl alcohol copolymer and the titanium compound.

13. A method for producing the multilayer structure according to claim 8 or 9, the method comprising melt-molding a layer containing the composition.

## INTERNATIONAL SEARCH REPORT

| International application No. |
|---|
| **PCT/JP2024/034322** |

### A. CLASSIFICATION OF SUBJECT MATTER

*C08L 29/04*(2006.01)i; *B32B 27/28*(2006.01)i; *C08K 3/11*(2018.01)i; *C08K 3/105*(2018.01)i
FI:   C08L29/04 A; C08K3/11; C08K3/105; B32B27/28 102

According to International Patent Classification (IPC) or to both national classification and IPC

### B. FIELDS SEARCHED

Minimum documentation searched (classification system followed by classification symbols)

C08L29/04; B32B27/28; C08K3/11; C08K3/105

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

### C. DOCUMENTS CONSIDERED TO BE RELEVANT

| Category* | Citation of document, with indication, where appropriate, of the relevant passages | Relevant to claim No. |
|---|---|---|
| X | JP 2019-163378 A (MITSUBISHI CHEMICAL CORPORATION) 26 September 2019 (2019-09-26)<br>claim 1, paragraphs [0007], [0070], [0083]-[0085], [0088], [0094]-[0095], examples 2, 3, table 1 | 1-13 |
| Y | | 1-13 |
| Y | JP 2000-263712 A (KURARAY CO., LTD.) 26 September 2000 (2000-09-26)<br>claims 1, 4, 5, paragraphs [0009], [0064], examples 1-8, table 1 | 1-13 |
| Y | JP 2000-272066 A (SUMITOMO BAKELITE CO., LTD.) 03 October 2000 (2000-10-03)<br>claims 1, 4, paragraphs [0003], [0007], examples 1-3, table 1 | 1-13 |

☐ Further documents are listed in the continuation of Box C.   ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **30 October 2024** | **19 November 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
**Information on patent family members**

International application No.

**PCT/JP2024/034322**

| Patent document cited in search report | | | Publication date (day/month/year) | Patent family member(s) | Publication date (day/month/year) |
|---|---|---|---|---|---|
| JP | 2019-163378 | A | 26 September 2019 | (Family: none) | |
| JP | 2000-263712 | A | 26 September 2000 | (Family: none) | |
| JP | 2000-272066 | A | 03 October 2000 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022013857 A

- JP 2022027726 A